# EUROPÄISCHE PATENTANMELDUNG

(11) **EP 1 178 253 A1**
(43) Veröffentlichungstag der Anmeldung: **06.02.2002**
(21) Anmeldenummer: 00116664.4
(22) Anmeldetag: 02.08.2000
(51) Int. Cl.: F16L 23/026, F16L 13/02, B65G 53/52

(54) **Verbundlagenrohr mit Flansch**

(71) Anmelder: Esser -Werke GmbH & Co. KG, 59581 Warstein (DE)
(72) Erfinder: Esser, Alexander, 59581 Warstein (DE)
(74) Vertreter: Bockermann, Rolf, Dipl.-Ing.

(57) **Zusammenfassung**

Das Verbundlagenrohr (1) weist eine gehärtete Innenlage (2), eine demgegenüber weichere Außenlage (3) und an den Enden umfangsseitige Kupplungsflansche (12) auf. Die einander abgewandten Stirnseiten der Innenlage (2), der Außenlage (3) und der Kupplungsflansche (12) erstrecken sich jeweils in denselben Querebenen (QE). Die Kupplungsflansche (12) sind auf endseitig der Außenlage (3) durch Schweißen befestigte Manschetten (7) verschweißt. Die Stirnseiten der Manschetten (7) erstrecken sich ebenfalls in den Querebenen (QE).

## Beschreibung

Die Erfindung betrifft ein Verbundlagenrohr gemäß den Merkmalen im Oberbegriff des Patentanspruchs 1.

Ein derartiges Verbundlagenrohr wird als Bestandteil eines Rohrstrangs zum Transport von abrasiven Materialien, wie z.B. Beton und Sanden eingesetzt. Die gehärtete Innenlage setzt hierbei dem zu transportierenden Material einen erhöhten Verschleißwiderstand entgegen, während die demgegenüber weichere Außenlage sowohl beim Transport des Verbundlagenrohrs als auch bei seinem Einsatz äußeren Beanspruchungen, wie z.B. Schlägen oder Stößen, widerstehen soll.

Dieses Verbundlagenrohr hat ferner die Eigenschaft, dass die einander abgewandten Stirnseiten seiner Kupplungsbunde in denselben Querebenen verlaufen, in denen sich auch die Stirnseiten der Innenlage und der Außenlage erstrecken. Auf diese Weise ist es möglich, das Verbundlagenrohr nach dem Lösen der es in einem Rohrstrang mit den benachbarten Verbundlagenrohren verbindenden Kupplungsmittel quer aus dem Rohrstrang zu entfernen, ohne dass hierfür der Rohrstrang auseinander gezogen werden muss. Umgekehrt bildet es kein Problem, ein neues Verbundlagenrohr auf dieselbe Art und Weise in den Rohrstrang einzufügen und wieder mit den benachbarten Verbundlagenrohren zu kuppeln. Verschlissene Verbundlagenrohre können auf diese Weise schnell und einfach ersetzt werden.

Ein Verfahren zur Herstellung eines solchen Verbundlagenrohrs besteht darin, dass zunächst die Kupplungsflansche endseitig auf die Außenlage geschweißt werden und danach die Innenlage gehärtet wird. Aufgrund des Härtevorgangs bleibt es hierbei nicht aus, dass sich das Verbundlagenrohr durchbiegt. Die Stirnseiten des Verbundlagenrohrs verlaufen dann nicht mehr parallel zueinander. Des Weiteren ändert sich die Rohrlänge. Es ist daher erforderlich, die Parallelität der Stirnseiten des Verbundlagenrohrs und die gewünschte Länge durch spanabhebende Bearbeitung wieder herzustellen.

Abgesehen davon, dass hiermit ein zusätzlicher Aufwand verbunden ist, muss ferner berücksichtigt werden, dass die Kupplungsflansche dicker als eigentlich erforderlich ausgeführt werden müssen, damit nach der spanabhebenden Bearbeitung die Kupplungsflansche noch die geforderte Mindestdicke aufweisen, um ihrer Aufgabe gewachsen zu sein.

Eine Alternative zu diesem Herstellungsverfahren besteht darin, dass das Verbundlagenrohr zunächst ohne die Kupplungsflansche bezüglich der Innenlage gehärtet, anschließend endseitig kalibriert und letztlich exakt unter Herstellung paralleler Stirnseiten auf Länge geschnitten wird. Danach werden die Kupplungsflansche auf die Enden des Verbundlagenrohrs geschoben und mit der Außenlage verschweißt. Da bei diesen Schweißvorgängen notwendigerweise die Innenlage im Bereich der Kupplungsflansche gekühlt werden muss, um das Härtegefüge aufrecht zu erhalten, entstehen anschließend beim Abkühlen Spannungen in den Schweißnähten, die zu radialen, nach innen gerichteten Druckbeanspruchungen führen und die Gefahr in sich bergen, dass die Innenlage endseitig reißt.

Der Erfindung liegt ausgehend vom Stand der Technik die Aufgabe zugrunde, Maßnahmen vorzuschlagen, welche die Fertigung eines Verbundlagenrohrs, insbesondere größeren Durchmessers und Länge, wesentlich erleichtern.

Die Lösung dieser Aufgabe besteht nach der Erfindung in den im kennzeichnenden Teil des Patentanspruchs 1 aufgeführten Merkmalen.

Die Integration von Manschetten endseitig der Außenlage erlaubt es, dass diese Manschetten zunächst auf die Außenlage geschweißt werden können. Anschließend wird ein derartiges Verbundlagenrohr in bekannter Weise gehärtet und dann unter Herstellung paralleler Stirnseiten auf Länge bearbeitet. Da sich nunmehr auf der Außenlage die Manschetten befinden, können jetzt die Kupplungsflansche nach dem Härten problemlos auf die Manschetten geschweißt werden, ohne dass die Innenlage endseitig gekühlt werden muss. Dabei bildet es keine Schwierigkeit, die einander abgewandten Stirnseiten der Kupplungsflansche exakt in den parallelen Querebenen der Innen- und Außenlagen anzuordnen. Auf diese Weise vereinfacht sich die Herstellung eines Verbundlagenrohrs, insbesondere bei größerem Durchmesser und Länge, erheblich. Es ist weder erforderlich, dickere Kupplungsflansche als notwendig einzusetzen, noch muss mit Spannungsrissen endseitig der Innenlage gerechnet werden.

Die Länge der Manschetten kann ohne weiteres so bemessen werden, dass bei der stirnseitigen Bearbeitung des Verbundlagenrohrs nach dem Härten auch die einander abgewandten Stirnseiten der Manschetten sich dann in denselben Querebenen erstrecken, in denen die Stirnseiten der Innenlage und der Außenlage verlaufen. Das Material der Manschetten entspricht bevorzugt dem Material der Außenlage.

Da die Manschetten am Außenumfang der Außenlage lediglich lagefixiert werden müssen, genügt es entsprechend den Merkmalen des Patentanspruchs 2, dass die Manschetten über ihren Stirnseiten abgewandte Kehlnähte mit der Außenlage verschweißt sind. Der Materialeinsatz für diese Kehlnähte ist gering.

Nach Patentanspruch 3 ist es ferner von Vorteil, wenn die Manschetten eine mehrfache Breite wie die Kupplungsflansche aufweisen. Auf diese Weise wird ein zusätzlicher Verschleißschutz erreicht, da alle Förderrohre den größten Verschleiß immer unter und hinter dem Einlaufflansch aufweisen. Die Breite der Manschetten ist insbesondere abhängig von dem Rohrdurchmesser. Sie kann bis etwa zur Hälfte eines Rohrdurchmessers gehen.

Darüberhinaus ist es fertigungstechnisch zu bevorzugen, wenn gemäß Patentanspruch 4 die Manschetten etwa dieselbe Wanddicke wie die Außenlage aufweisen.

Da die Kupplungsflansche im Einsatz im Prinzip stets in Richtung auf den Kupplungsspalt zwischen zwei aufeinander folgenden Verbundlagenrohren belastet werden, genügt es nach Patentanspruch 5, wenn die Kupplungsflansche über ihren Stirnseiten abgewandte Kehlnähte auf den Manschetten verschweißt sind.

Es kann jedoch in bestimmten Einsatzfällen ergänzend notwendig sein, dass entsprechend den Merkmalen des Patentanspruchs 6 die Kupplungsflansche zusätzlich über stirnseitige V-Nähte mit den Manschetten verschweißt sind. Diese V-Nähte können volumenmäßig wesentlich kleiner als die Kehlnähte zwischen den Kupplungsflanschen und den Manschetten bemessen werden. Wesentliche Kräfte haben sie nicht auszuhalten. Entsprechend gering ist der Materialeinsatz.

Die Erfindung ist nachfolgend anhand eines in der Zeichnung veranschaulichten Ausführungsbeispiels näher erläutert. Es zeigen:
- Figur 1: im vertikalen Längsschnitt ein Verbundlagenrohr;
- Figur 2: eine Stirnansicht des Verbundlagenrohrs der Figur 1 in Richtung des Pfeils II gesehen und
- Figur 3: in vergrößertem Maßstab den Ausschnitt III der Figur 1.

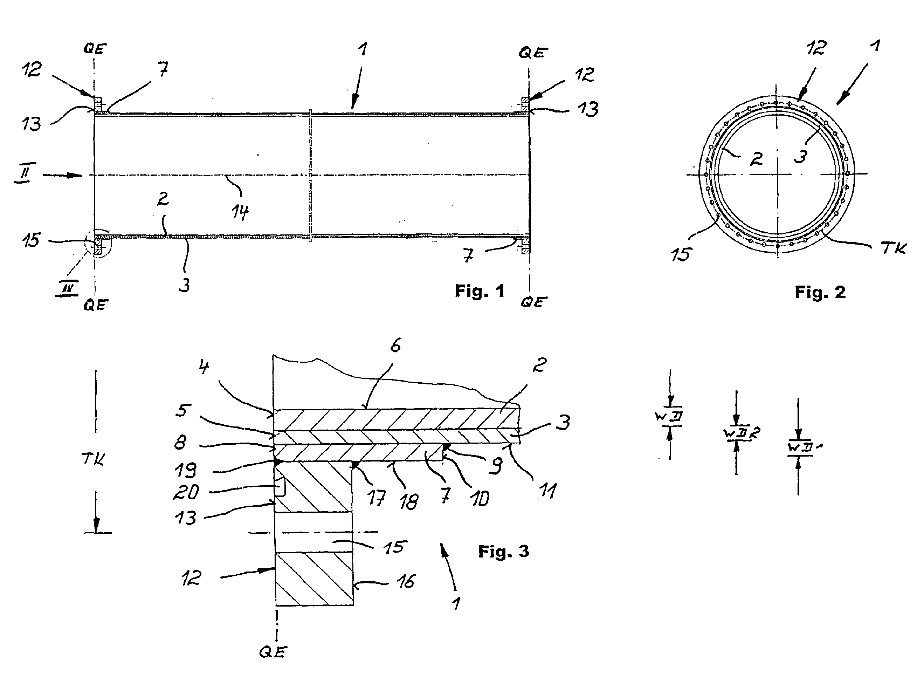

Mit 1 ist in den Figuren 1 bis 3 ein Verbundlagenrohr bezeichnet, wie es insbesondere zum Transport von abrasiven Medien, wie Beton und Sande zum Einsatz gelangt.

Dieses Verbundlagenrohr 1 umfasst eine gehärtete durchgehende Innenlage 2 und eine nicht gehärtete, ebenfalls durchgehende Außenlage 3. Die Stirnseiten 4, 5 der Innenlage 2 und der Außenlage 3 erstrecken sich in denselben parallelen Querebenen QE. Die Innenlage 2 ist zumindest über einen Teil ihrer Wanddicke WD von der inneren Oberfläche 6 her gehärtet.

Endseitig des Verbundlagenrohrs 1 sind auf die Außenlage 3 Manschetten 7 aus einem Material geschweißt, das dem Material der Außenlage 3 entspricht. Die einander abgewandten Stirnseiten 8 der Manschetten 7 erstrecken sich ebenfalls in den Querebenen QE. Die Schweißverbindung zwischen den Manschetten 7 und der Außenlage 3 erfolgt durch Kehlnähte 9 zwischen den den Querebenen QE abgewandten Stirnseiten 10 der Manschetten 7 und der äußeren Oberfläche 11 der Außenlage 3.

Die Wanddicke WD1 der Manschetten 7 entspricht etwa der Wanddicke WD2 der Außenlage 3.

Auf die Manschetten 7 sind ringförmige Kupplungsflansche 12 geschweißt. Deren einander abgewandten Stirnseiten 13 erstrecken sich ebenfalls in den Querebenen QE. Die Kupplungsflansche 12 besitzen auf einem Teilkreis TK eine Vielzahl von axialen, sich parallel zur Längsachse 14 des Verbundlagenrohrs 1 erstreckenden Bohrungen 15, die zur Verbindung zweier Verbundlagenrohre 1 nicht näher dargestellte Kupplungsbolzen aufnehmen.

Die Kupplungsflansche 12 sind auf ihren den in den Querebenen QE verlaufenden Stirnseiten 13 abgewandten Rückseiten 16 über Kehlnähte 17 mit der äußeren Oberfläche 18 der Manschetten 7 verschweißt. Des Weiteren ist erkennbar, dass die Kupplungsflansche 12 über V-Nähte 19 mit den Manschetten 7 verschweißt sind, die sich von den Stirnseiten 13 aus erstrecken.

Zwischen den Kupplungsbohrungen 15 und den V-Nähten 19 sind in den Kupplungsflanschen 12 Aufnahmenuten 20 für Dichtungsringe vorgesehen.

Die Herstellung des Verbundlagenrohrs 1 der Figuren 1 bis 3 kann wie folgt durchgeführt werden:

Nach dem Zusammenfügen der ungehärteten Innenlage 2 und der Außenlage 3 werden die Manschetten 7 mittels der Kehlnähte 9 endseitig auf die Außenlage 3 geschweißt. Anschließend wird die Innenlage 2 gehärtet. Die dabei entstehende Durchbiegung des Verbundlagenrohrs 1 sowie seine Längenänderung werden anschließend durch eine Bearbeitung der Stirnseiten 4, 5 der Innenlage 2 und der Außenlage 3 durch Drehen oder Schleifen beseitigt. Gleichzeitig wird hierbei die exakte Länge des Verbundlagenrohrs 1 bei Parallelität der Querebenen QE erzeugt.

Im Anschluss daran werden die Kupplungsflansche 12 mittels der Kehlnähte 17 und der V-Nähte 19 auf die Manschetten 7 geschweißt. Eine Kühlung der Innenlage 2 ist hierbei nicht erforderlich.

### Bezugszeichenaufstellung

- 1 -: Verbundlagenrohr
- 2 -: Innenlage v. 1
- 3 -: Außenlage v. 1
- 4 -: Stirnseiten v. 2
- 5 -: Stirnseiten v. 3
- 6 -: innere Oberfläche v. 2
- 7 -: Manschetten
- 8 -: Stirnseiten v. 7
- 9 -: Kehlnähte zw. 3 u. 7
- 10 -: Stirnseiten v. 7
- 11 -: Oberfläche v. 3
- 12 -: Kupplungsflansche
- 13 -: Stirnseiten v. 12
- 14 -: Längsachse v. 1
- 15 -: Bohrungen in 12
- 16 -: Rückseiten v. 12
- 17-: Kehlnähte
- 18 -: äußere Oberfläche v. 7
- 19 -: V-Nähte
- 20 -: Aufnahmenuten

- QE -: Querebenen
- WD -: Wanddicke v. 6
- WD1 -: Wanddicke v. 3

## Patentansprüche

1. Verbundlagenrohr, das eine gehärtete Innenlage (2), eine demgegenüber weichere Außenlage (3) und an den Enden umfangsseitige Kupplungsflansche (12) aufweist, deren einander abgewandte Stirnseiten (13) sich jeweils in einer Querebene (QE) mit den dort benachbarten Stirnseiten (4, 5) der Innenlage (2) und der Außenlage (3) erstrecken, **dadurch gekennzeichnet, dass** die Kupplungsflansche (12) auf endseitig auf der Außenlage (3) durch Schweißen befestigten Manschetten (7) verschweißt sind, deren einander abgewandte Stirnseiten (8) sich ebenfalls in den Querebenen (QE) erstrecken.

2. Verbundlagenrohr nach Patentanspruch 1, **dadurch gekennzeichnet, dass** die Manschetten (7) über ihren Stirnseiten (8) abgewandte Kehlnähte (9) mit der Außenlage (3) verschweißt sind.

3. Verbundlagenrohr nach Patentanspruch 1 oder 2, **dadurch gekennzeichnet, dass** die Manschetten (7) eine mehrfache Breite wie die Kupplungsflansche (12) aufweisen.

4. Verbundlagenrohr nach einem der Patentansprüche 1 bis 3, **dadurch gekennzeichnet, dass** die Manschetten (7) etwa dieselbe Wanddicke (WD1) wie die Außenlage (3) aufweisen.

5. Verbundlagenrohr nach einem der Patentansprüche 1 bis 4, **dadurch gekennzeichnet, dass** die Kupplungsflansche (12) über ihren Stirnseiten (13) abgewandte Kehlnähte (17) auf den Manschetten (7) verschweißt sind.

6. Verbundlagenrohr nach einem der Patentansprüche 1 bis 5, **dadurch gekennzeichnet, dass** die Kupplungsflansche (12) über stirnseitige V-Nähte (19) mit den Manschetten (7) verschweißt sind.
